# EUROPEAN PATENT APPLICATION

(11) **EP 3 812 526 A1**
(43) Date of publication of application: **28.04.2021**
(21) Application number: 19204391.7
(22) Date of filing: 21.10.2019
(51) Int. Cl.: E04C 3/02, F16B 5/00, F16B 5/04, F16B 7/06

(54) **A PERFORATED BRACE BAND CONNECTOR AND A BRACE BAND SYSTEM**

(71) Applicant: Illinois Tool Works, Inc., Glenview, Illinois 60025 (US)
(72) Inventor: SKALSHØI, Ole, Illinois 60025 (US); ENSLEV, Martin, Illinois 60025 (US); ERIKSEN, Amalie, Illinois 60025 (US); FRIIS, Morten, Illinois 60025 (US)
(74) Representative: HGF

(57) **Abstract**

The present invention provides for a connector for anchoring perforated brace bands, comprising a plate member, having an upper surface and a lower surface opposing said upper surface, said pate member further comprising a first end portion, comprising at least one first-type rivet, operably coupled to and projecting away from said upper surface and configured to couplingly engage with perforations of a first portion of a perforated brace band; a second end portion, opposite said first end portion, comprising at least one of said first-type rivet operably coupled to and projecting away from said lower surface and configured to couplingly engage with perforations of a second portion of the perforated brace band, and a step portion, provided between said first end portion and said second end portion, having at least one aperture configured to guidingly receive the perforated brace band, wherein said second end portion is parallelly offset from said first end portion by a predetermined distance in a direction normal to said upper surface via said step portion.

## Description

The present invention relates to fasteners in general, and in particular bracing systems, such as, for example, perforated brace band systems for building and roof structures. Furthermore, the present invention relates to perforated brace band connectors.

### Introduction

In construction, bracing systems are used to strengthen and reinforce buildings and other structural frameworks, so as to withstand lateral forces when exposed to extreme wind and/or seismic activity. In particular, bracing systems are commonly used for timber frame structures and roof trusses, but also for steel frame structures.

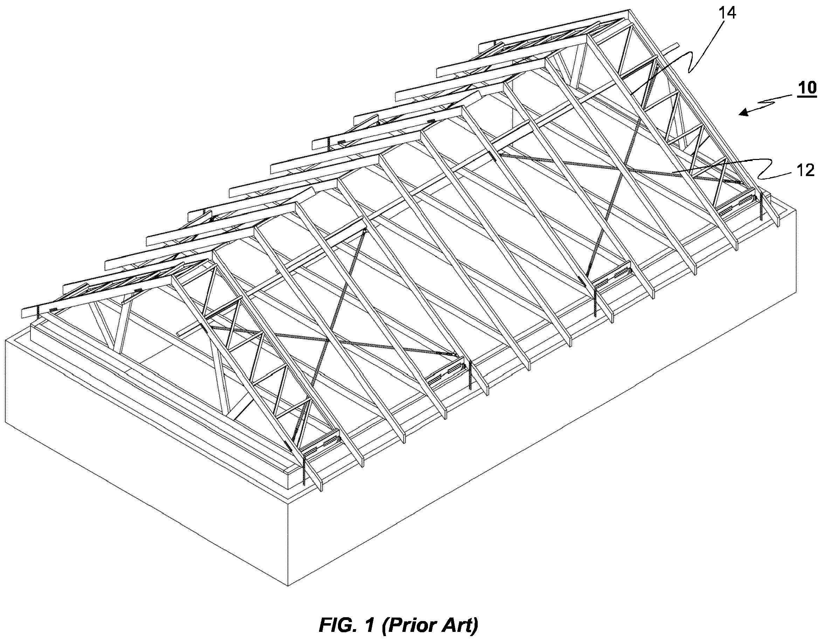

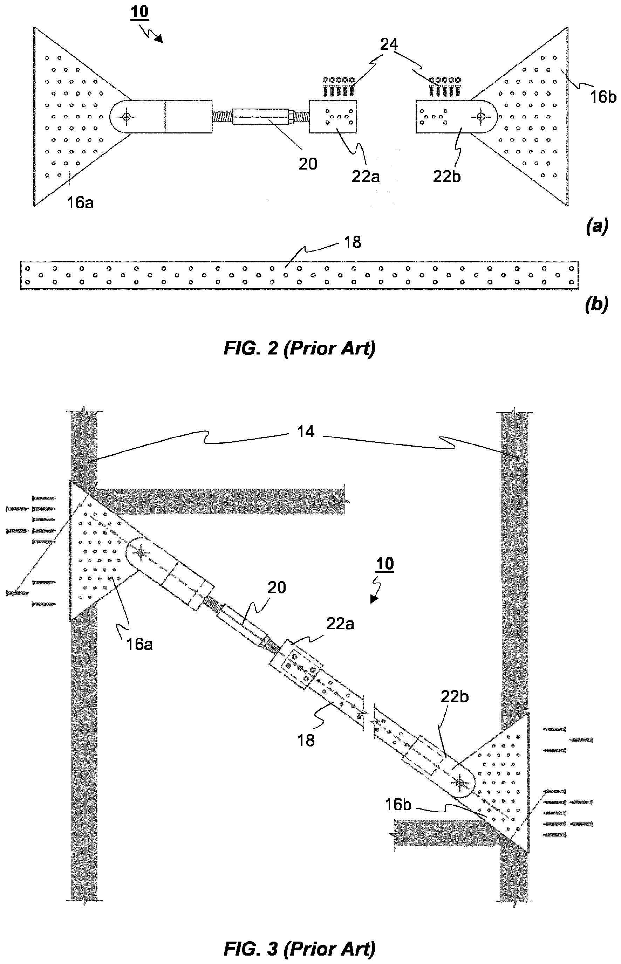

Figure 1 illustrates wind bracing applied to a timber-framed roof (i.e. a roof truss). Here, a typical wind brace band system 10 may comprise perforated bracing bands 12 or straps that are installed diagonally across a number of roof trusses 14 or rafters. A more detailed example of a known wind brace band system 10 is illustrated in Figure 2, comprising two end brackets 16a, 16b for attachment to the truss 14, at least one perforated brace band 18, at least one tensioner 20 and a first and a second attachment plate 22a and 22b (including nuts and bolts 24). During assembly, the perforated brace band 18 is coupled to the attachment plates 22a, 22b using a plurality of bolts and nuts 24 that are inserted through respective holes of the attachment plates 22a, 22b and the perforated brace band 18, while the tensioner 20 is at its maximum extension. The end brackets 16a, 16b are then mounted to respective sections of the roof trusses 14 (i.e. diagonally across) and the assembly is tensioned to a predetermined force via the tensioner 20.

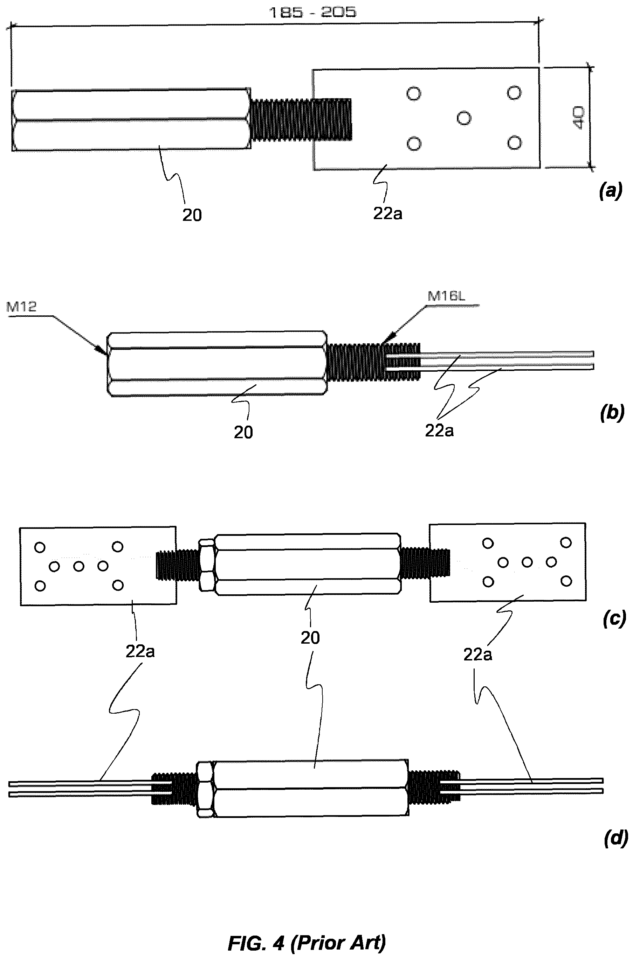

Figure 3 illustrates the assembled wind brace band system 10 installed diagonally to roof trusses 14. Figures 4 (a) and (b) illustrates top view and side view of a coupling between the tensioner 20 and two attachment plates 22a spaced apart so as to allow an end portion of the perforated band 18 to slide in between the two attachment plates and fixed with the bolts and nuts 24. Figure 4 (c) and (d) illustrates a top view and a side view of the coupling provided on either side of the tensioner 20 allowing end portions of the perforated brace band 18 to be connected to respective attachment plates 22a on both sides of the tensioner 20.

However, the process of joining the perforated brace band 18 to one or more attachment plates 22a is cumbersome and time consuming, requiring additional tools and hardware (e.g. bolts and nuts 24). Alternative solutions to join the perforated brace band 18 to the end brackets 16 (e.g. via attachment plates 22a or 22b) may utilise an additional bottom plate that comprises fixed pins to joiningly receive an end portion of the perforated brace band 18 at one end section and an end portion of a plate member at the other end section. However, this solution requires further locking elements to safely secure the coupled perforated brace band and plate member, which will add to the assembly costs, increase the time required to assemble the brace, as well as, provide a potential risk for the joint components to disengage (e.g. if not secured properly).

Therefore, it is an object of the present invention to provide a brace band system with improved ease of use, that is less time-consuming during assembly and which is more cost effective. In particular, it is an object of the present invention to provide an improved connector for joining the end bracket and/or tensioner of a bracing system with a perforated brace band.

### Summary of the Invention

According to a first aspect of the invention, there is provided a connector for anchoring perforated brace bands, comprising:
a plate member, having an upper surface and a lower surface opposing said upper surface, said plate member further comprising:
a first end portion, comprising at least one first-type rivet, operably coupled to and projecting away from said upper surface and configured to couplingly engage with perforations of a first portion of a perforated brace band;
a second end portion, opposite said first end portion, comprising at least one of said first-type rivet operably coupled to and projecting away from said lower surface and configured to couplingly engage with perforations of a second portion of the perforated brace band, and
a step portion, provided between said first end portion and said second end portion, having at least one aperture configured to guidingly receive the perforated brace band, and wherein said second end portion is parallelly offset from said first end portion by a predetermined distance in a direction normal to said upper surface via said step portion.

This provides the advantage of a single connector that is configured to mount or couple perforated brace bands to, for example, respective end brackets of a bracing system, or tensioners provided between the end bracket and the perforated brace band, without the need for fastening bolts and nuts or tools. In particular, the connector of the present invention allows a perforated brace band to be simply guided through the stepped aperture and securely "hooked" into opposing pins or rivets. The opposing pin(s) or rivet(s) separated by the apertured step portion provides the advantage of a particularly simple but secure connection, because the engaged end portion of the levered brace band is synchronously and lockingly forced into opposing and counteractive pins, when moved (i.e. levered at the step portion) into a first direction, during assembly. A second connector may be attached to the other end of the perforated brace band which is "levered" into the opposite direction to the first brace band end, so that are counter actively engaged with respective connectors.

Advantageously, said predetermined distance may be defined so as to substantially parallelly align the perforated brace band with said upper and lower surface of said plate when couplingly engaged with said at least one first-type rivet of said first end portion and said at least one first-type rivet of said second end portion, during use. This provides the advantage that the opposing pin(s) or rivet(s) are engaged simultaneously and equally.

Advantageously, said first end portion may comprise a plurality of said first-type rivets arranged so as to couplingly engage with perforations of the first portion of the perforated brace band, during use. Preferably, said first end portion may comprise at least two first-type rivets.

Advantageously, said second end portion may comprise a plurality of said first-type rivets operably arranged on said lower surface so as to couplingly engage with perforations of the second portion of the perforated brace band, during use. Preferably, said second end portion may comprise at least four first-type rivets.

Advantageously, said first end portion and/or said second end portion may further comprise at least one second-type rivet operably coupled to and projecting away from respective one of said upper surface and said lower surface of said plate member, and configured to couplingly and retainingly engage with perforations of respective first and second portion of the perforated brace band. Preferably, said at least one second-type rivet may be made from a resilient material adapted to provide a retaining interference fit with respective perforations of the perforated brace band. This provides the advantage that the perforated brace band is held in coupling engagement while the brace band system can be tightened, i.e. the brace band ends is prevented from disengaging with the pin(s) or rivet(s) of the connector. Even more preferably, said resilient material may be a polymer.

This provides the advantage that the perforated brace band is held in coupling engagement while the brace band system can be tightened, i.e. the brace band ends is prevented from disengaging with the pin(s) or rivet(s) of the connector. In particular, the second-type pin or rivet is configured to "wedge" into one of the holes of the perforated brace band preventing the first-type pin(s) or rivet(s) (e.g. made from metal) from sliding out of respective holes of the perforated brace band when in an untensioned state.

Advantageously, said plate member and/or said at least one first-type rivet may be made from metal.

Advantageously, said second end portion may further comprise a mount adapted to operably couple said plate member to an external structure. Preferably, said mount may be an aperture configured to couplingly receive a connection bolt. This provides the advantage that the connector of the present invention can be retrofitted to existing brace band systems, e.g. wind brace band systems, by replacing the existing connectors.

According to a second aspect of the invention, there is provided a wind brace band system comprising a first and second brace mount, at least one tensioner, at least one perforated brace band and at least one connector according to the first aspect of the invention.

### Brief Description of the Drawings

Example embodiment(s) of the invention are now described, by way of example only, hereinafter with reference to the accompanying drawings, in which:
**Figure 1** **(Prior Art)** shows a typical use of a known wind brace band system, installed between trusses of a timber roof structure;
**Figure 2** **(Prior Art)** illustrates a front view of the individual component parts of a typical wind brace band system including (a) two end brackets, a tensioner and one or more attachment plates (incl. nuts and bolts) and (b) a perforated brace band of a predetermined length;
**Figure 3** **(Prior Art)** illustrates a front view of the wind brace band system shown in Figure 2 assembled and installed between trusses of a roof structure;
**Figure 4** **(Prior Art)** shows (a) a top-view and (b) a side view of a first-type tensioner coupling with two superimposed attachment plates on one end, and (c) a top-view and (d) a side view of a second-type tensioner coupling with two superimposed attachment plates on both ends;
**Figure** 5 shows an illustration of an example embodiment of the connector of the present invention (a) perspective view, (b) side-view and (c) top-view;
**Figure 6** shows (a) a perspective view and (b) a side-view of the connector and an end portion of the perforated brace band during assembly;
**Figure 7** shows (a) a perspective view and (b) a side-view of the connector and an end portion of the perforated brace band once assembled (i.e. pressed together) and ready for tensioning;
**Figure 8** shows (a) and (b) a perspective view of an assembled wind brace band system where the tensioner is provided at the interface between the connector and the end bracket utilising a single perforated brace band, and (c) a partial perspective view of an assembled wind brace band system where the tensioner is provided centrally between two perforated brace bands;
**Figure 9** shows an illustration of another example embodiment of the connector of the present invention in (a) perspective view and (a) top-view, including an alternative profile design of the connector.

### Detailed Description

The described example embodiment relates to a connector for a brace band system, and in particular for a wind brace band system particularly suitable for timber structures, such as roof trusses. However, the invention is not necessarily restricted to bracing systems for timber structures but may also be used with any other perforated band system that requires some kind of connection with the perforated band.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner. Like reference numerals are used to depict like features throughout. Also, the terms 'rivet' and 'pin' are used interchangeably and are intended to include permanently attached pins or rivets (e.g. glued, soldered or welded etc.), but also pins and rivets removably coupled, such as, rivets that are attached and fixingly retained through a suitable aperture (friction-lock rivet or movable pins).

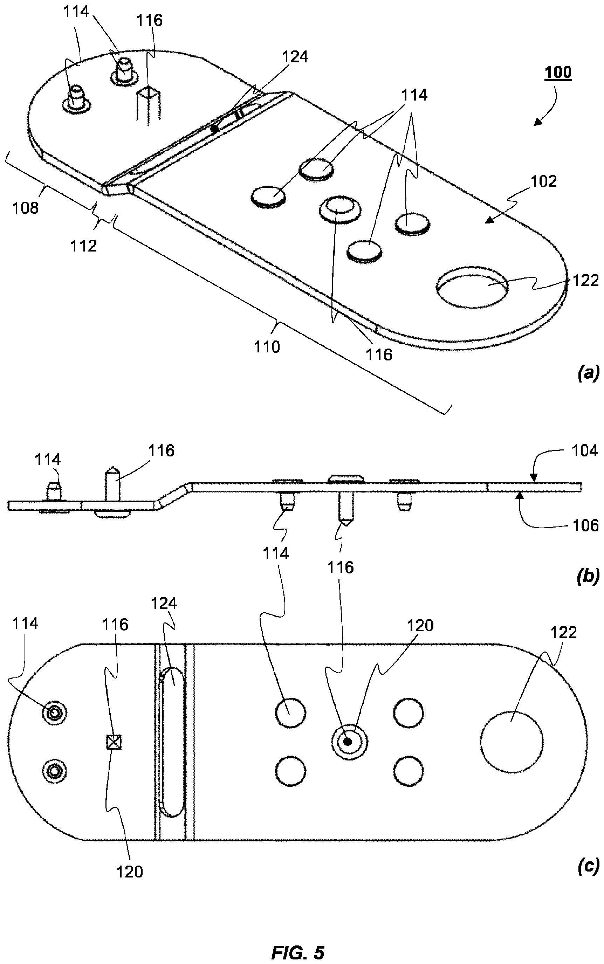

Referring now to Figure 5, an example embodiment of a connector 100 suitable for perforated brace bands of a bracing system is shown. The connector 100 comprises a plate structure 102 having a substantially planar upper surface 104 and a substantially planar lower surface 106. Moreover, the plate structure 102 includes a first end portion 108 and a second end portion 110, as well as, a step portion 112 joining the first 108 and second 110 end portion.

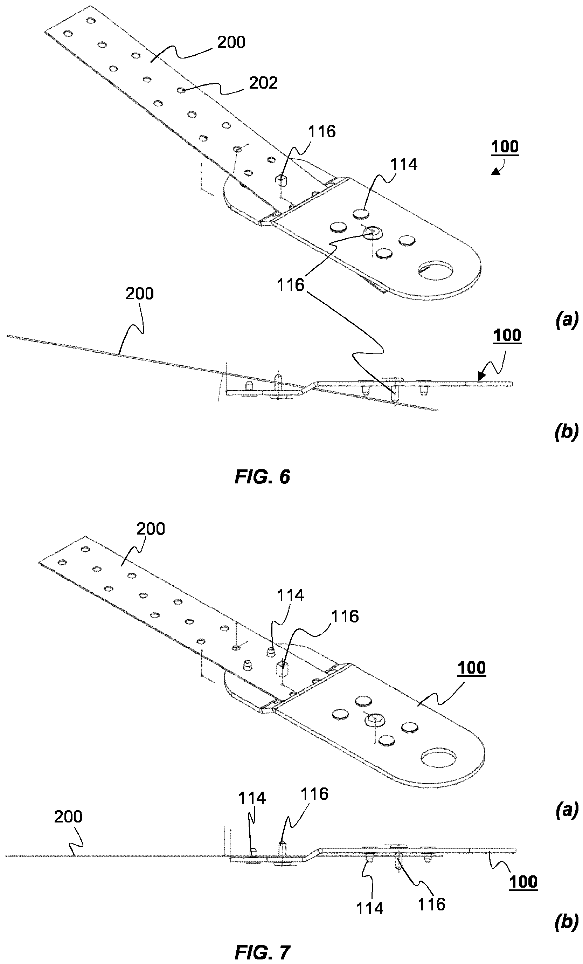

In this particular example, the first end portion 108 is provided with two substantially rigid pins 114 and one substantially resilient rivet or pin 116, each one projecting away from the upper surface 104. The substantially rigid pins 114 and substantially resilient rivet or pin 116 are arranged, so as to matingly match respective holes of the to be coupled perforated brace band 200 (see, for example, Figure 6). The second end portion 110 is provided with four rigid pins 114 and one resilient rivet or pin 116, each one projecting away from the lower surface 106, i.e. into a direction opposite to the pins or rivets 114, 116 provided on the upper surface 104. The step portion 112 comprises an aperture 124 suitable to guidingly receive the perforated brace band 200. Furthermore, the step portion 112 parallelly offsets the first 108 and second 110 end portions in a direction normal to any one of the upper 104 or lower 106 surface by a distance that is suitable to accommodate for the operably engaging perforated brace band 200, i.e. relative to the thickness of the perforated brace band 200. In particular and preferably, the distance between the lower surface 106 and the offset upper surface 104 is such that the perforated brace band 200 is able to operably engage with the rigid pins 114 and resilient pin 116 of the first end portion 108 and the rigid pins 114 and resilient pin 116 of the second end portion 110, while aligning substantially parallel with the upper 104 and lower 106 surface of the plate structure 102 (see, for example, Figure 7(b)).

In a preferred embodiment, the plate structure 102 and the substantially rigid pins 114 may be made from a metal or metal alloy, wherein the substantially resilient pin or rivet may be made from a polymer, such as, for example, a resiliently malleable plastic material suitable to provide a temporarily retaining interference fit with a respective hole of the perforated brace band 200. The metal pins 114 may be permanently attached to the plate structure 102 (e.g. glued, soldered, welded, or even as integral part of the plate structure 102 by pressing the pin out of the plate structure 102). Alternatively, the metal pins 114 may be removably but fixingly pushed through respective holes (not shown) in the plate structure 102 (the pin shaft may provide an interference fit with the hole and the pin head functions as a stop). The resilient plastic rivets or pins 116 may be removably but retainingly pushed through a respective hole 120 in the plate structure 102. The plastic rivet or pin 116 may comprise a head portion (flat head) adapted to stop the plastic rivet or pin 116 from pushing out of the hole 120. The removable plastic rivet or pin 116 allows for replacement in the event the "softer" rivet or pin 116 is damaged or wears out from repeated use. Alternatively, the plastic rivet or pin 116 may be permanently attached to the plate structure 102. In yet another alternative embodiment, the connector 100 may be used without the resilient plastic rivets or pins 116, i.e. when not needed during installation.

However, it is understood by the person skilled in the art, that any suitable material may be used for the plate structure 102, the rigid pins or rivets 114, as well as, the "softer" resiliently malleable pin or rivet 116.

Further, in order to accommodate for the two metal pins 114 and one plastic rivet or pin 116 at the first end portion 108, and the four metal pins 114 and one plastic rivet or pin 116, as well as, a mount aperture 122 at the second end portion 110, the first end portion 108 may be shorter in length than the second end portion 110 for this particular example embodiment. However, depending on the requirement of the system used with the connector 100 of the present invention, the first end portion 108 and the second end portion 110 may be of any suitable length and may comprise any number and pattern of metal pins 114 and plastic rivets or pins 116 appropriate for a particular bracing system and/or a particular perforated brace band.

Referring now to Figures 6, 7 and 8, the use of the connector 100 is described in combination with the assembly of a wind brace band system 300.

A wind brace band system 300, or any other brace band system, typically includes a perforated brace band 200 having suitably patterned holes 202 fitting onto and matching the pattern of the pins and/or rivets 114, 116 provided on the connector 100. During assembly, an end portion of the perforated brace band 200 is pushed through the aperture 124 of the step portion 112 at an angle relative to the upper 104 and/or lower 106 surface of the plate structure (i.e. so as not to interfere with the pins or rivets 114, 116). When the holes 202 of the perforated brace band 200 are aligned with respective pins or rivets 114, 116, the perforated brace band 200 is rotated (by hand) about the step portion 112 so as to force the rigid pins 114 and resilient pins or rivets 116 into respective holes 202. The friction fit with the resilient pin(s) or rivet(s) 116 provided at the first 108 and/or second 110 end portion maintains the engagement of the perforated brace band 200 with the connector 100, i.e. the parallelly aligned position of the perforated brace band 200 with respect to the upper 104 and lower 106 surface of the plate structure 102 is fixed into place until the wind brace band system 300 is tightened.

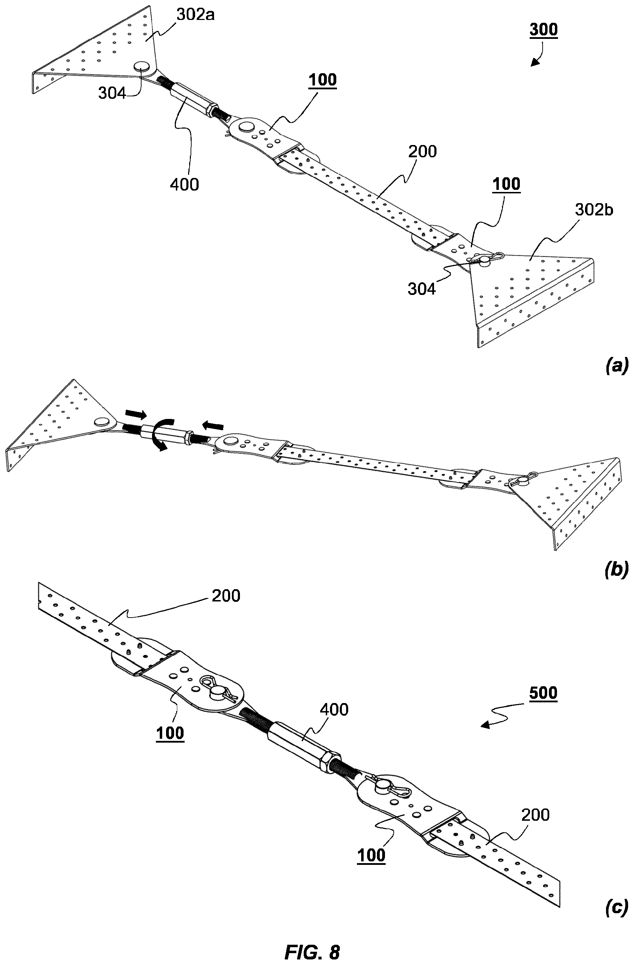

Once the perforated brace band 200 is mounted to respective connectors 100 of the wind brace band system 300, a tensioner 400, provided at one end of the wind brace band system 300 is operated, so as to tighten the coupling between the connectors 100 and perforated brace band 200. Figure 8 illustrates the tightening of the wind brace band system 300 by rotating the tensioner 400 (direction of arrow) and reducing the distance between the end brackets 302a and 302b of the wind brace band system 300 (arrows indicate direction of pull).

A portion of an alternative wind brace band system 500 is shown in Figure 8 (c), comprising, inter alia, two perforated brace bands 200, coupled to a central tensioner 400 via respective connectors 100. Also, the connector 100 of the present invention, may be coupled to the tensioner 400 and/or end brackets 302a, 302b, via mount 122. In this particular example, the mount 122 is an aperture configured to receive a bolt 304 so as to movably couple the connector 100 to the end bracket 302a, 302b and/or tensioner 400. The coupling 122, 304 is configured to allow relative movement between the connector 100 and respective one of the end bracket 302a, 302b or tensioner 400 .

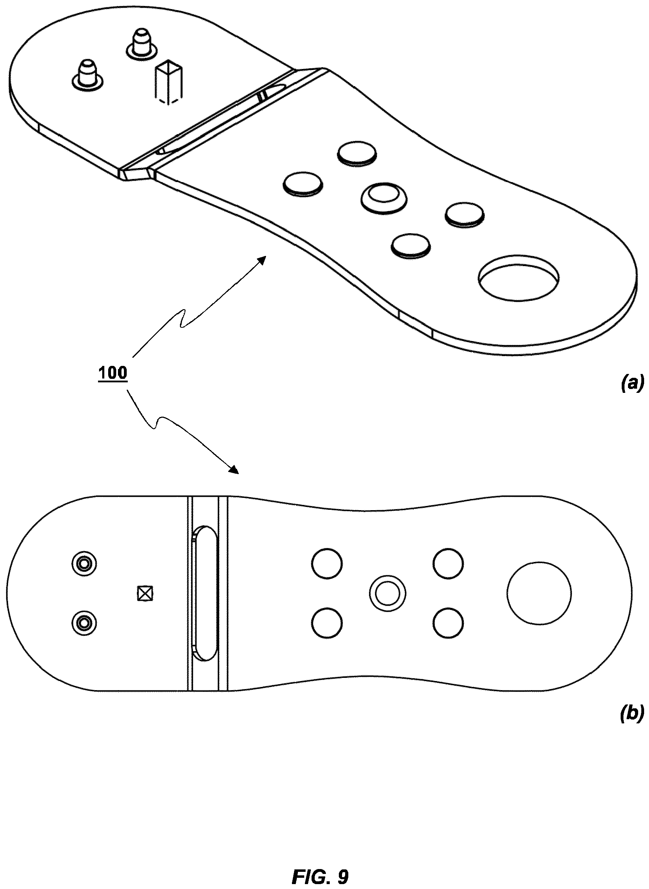

Figure 9 shows an alternative design of the plate structure 102 of the connector 100 of the present invention, i.e. having a narrowed mid-section. However, it is understood that the plate structure 102 may have any suitable shape, any number and pattern of pins or rivets 114, 116, as well as, any suitable mount 122 for coupling the connector 100 to an external component.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A connector for anchoring perforated brace bands, comprising:
a plate member, having an upper surface and a lower surface opposing said upper surface, said pate member further comprising:
a first end portion, comprising at least one first-type rivet, operably coupled to and projecting away from said upper surface and configured to couplingly engage with perforations of a first portion of a perforated brace band;
a second end portion, opposite said first end portion, comprising at least one of said first-type rivet operably coupled to and projecting away from said lower surface and configured to couplingly engage with perforations of a second portion of the perforated brace band, and
a step portion, provided between said first end portion and said second end portion, having at least one aperture configured to guidingly receive the perforated brace band,
wherein said second end portion is parallelly offset from said first end portion by a predetermined distance in a direction normal to said upper surface via said step portion.

2. A connector according to any one of the preceding claims, wherein said predetermined distance is defined so as to substantially parallelly align the perforated brace band with said upper and lower surface of said plate when couplingly engaged with said at least one first-type rivet of said first end portion and said at least one first-type rivet of said second end portion, during use.

3. A connector according to any one of the preceding claims, wherein said first end portion comprises a plurality of said first-type rivets arranged so as to couplingly engage with perforations of the first portion of the perforated brace band, during use.

4. A connector according to claim 3, wherein said first end portion comprises at least two first-type rivets.

5. A connector according to any one of the preceding claims, wherein said second end portion comprises a plurality of said first-type rivets operably arranged on said lower surface so as to couplingly engage with perforations of the second portion of the perforated brace band, during use.

6. A connector according to claim 5, wherein said second end portion comprises at least four first-type rivets.

7. A connector according to any one of the preceding claims, wherein said first end portion and/or said second end portion further comprise at least one second-type rivet operably coupled to and projecting away from respective one of said upper surface and said lower surface of said plate member, and configured to couplingly and retainingly engage with perforations of respective first and second portion of the perforated brace band.

8. A connector according to claim 7, wherein said at least one second-type rivet is made from a resilient material adapted to provide a retaining interference fit with respective perforations of the perforated brace band.

9. A connector according to claim 8, wherein said resilient material is a polymer.

10. A connector according to any one of the preceding claims, wherein said plate member is made from metal.

11. A connector according to any one of the preceding claims, wherein said at least one first-type rivet is made from metal.

12. A connector according to any one of the preceding claims, wherein said second end portion further comprises a mount adapted to operably couple said plate member to an external structure.

13. A connector according to claim 12, wherein said mount is an aperture configured to couplingly receive a connection bolt.

14. A wind brace band system comprising a first and second brace mount, at least one tensioner, at least one perforated brace band and at least one connector according to any one of claims 1 to 13.
